# EUROPEAN PATENT APPLICATION

(11) **EP 4 648 499 A1**
(43) Date of publication of application: **12.11.2025**
(21) Application number: 23914450.4
(22) Date of filing: 04.12.2023
(51) Int. Cl.: H04W 64/00

(54) **LOCATION INFORMATION REPORTING METHOD AND APPARATUS**

(30) Priority: 03.01.2023 CN 202310004494
(71) Applicant: Datang Mobile Communications Equipment Co., Ltd., Beijing 100085 (CN)
(72) Inventor: WU, Liping, Beijing 100085 (CN); XIONG, Chunshan, Beijing 100085 (CN)
(74) Representative: Studio Torta S.p.A.
(86) International application number: PCT/CN2023/136068
(87) International publication number: WO 2024/146316

(57) **Abstract**

Provided in the embodiment of the present disclosure are a location information reporting method and an apparatus. The method comprises: receiving a positioning message sent by an application layer location management device in a first access mode; according to the positioning message, determining a second access mode of and a target positioning method for a terminal; and, by means of the second access mode, sending to the application layer location management device the location information obtained by the terminal on the basis of the target positioning method.

## Description

### CROSS-REFERENCES TO RELATED APPLICATIONS

The present application claims priority to Chinese patent application No. 202310004494X filed on January 03, 2023, entitled "Location Information Reporting Method and Apparatus", which is hereby incorporated by reference in its entirety.

### FIELD

The present application relates to the field of communications, and in particular, to methods and apparatuses for location information reporting.

### BACKGROUND

In a current 5G core network positioning technology, in case that a terminal accesses a core network through a certain access method (such as a 3GPP access method) and registers to a 5G network, the terminal reports location information to a core network through the access method (such as the 3GPP access method), and the core network also reports location information to a 5G application layer through the access method (such as the 3GPP access method).

In the above-mentioned related art, reporting location information through the method of the terminal accessing the core network results in poor flexibility and low reliability of reporting location information.

### BRIEF SUMMARY

Embodiments of the present application provide methods and apparatuses for location information reporting, which is used to solve defects that reporting location information in related art has poor flexibility and low reliability, and enhance the flexibility and reliability of reporting location information.

An embodiment of the present application provides a method for location information reporting, performed by a terminal, including:
receiving a positioning message transmitted, through a first access method, from an application layer location management device; and
determining a second access method for the terminal and a target positioning method based on the positioning message; and transmitting, through the second access method, location information obtained by the terminal based on the target positioning method to the application layer location management device.

In an embodiment, according to the method for location information reporting of an embodiment of the present application, determining the second access method for the terminal and the target positioning method based on the positioning message includes any of following:
based on the positioning message, determining an access method with best network quality among access methods supported by the terminal as the second access method, and determining a positioning method corresponding to the second access method as the target positioning method;
in case that the positioning message includes positioning quality of service, determining a positioning method satisfying the positioning quality of service among positioning methods supported by the terminal as the target positioning method and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message includes an access method indication, determining an access method indicated by the access method indication as the second access method, and determining a positioning method indicated by the access method indication as the target positioning method;
in case that the positioning message includes priorities of access methods supported by the terminal, determining an access method with highest priority as the second access method, and determining a positioning method corresponding to the second access method as the target positioning method; or
in case that the positioning message includes an access method and a positioning method, determining the access method included in the positioning message as the second access method, and determining the positioning method included in the positioning message as the target positioning method.

In an embodiment, according to the method for location information reporting of an embodiment of the present application, the method further includes:
transmitting a location service registration request to the application layer location management device, where the location service registration request includes positioning capability information of the terminal; and
receiving a location service registration response transmitted, based on the positioning capability information, from the application layer location management device.

In an embodiment, according to the method for location information reporting of an embodiment of the present application, the positioning capability information includes at least one of following:
an identifier of the terminal;
access methods supported by the terminal;
positioning methods corresponding to access methods; or
positioning quality of service corresponding to positioning methods.

In an embodiment, according to the method for location information reporting of an embodiment of the present application, the access methods include at least one of following:
two 3GPP access methods;
two non-3GPP access methods; or
one 3GPP access method and one non-3GPP access method.

An embodiment of the present application further provides a method for location information reporting, performed by an application layer location management device, including:
receiving a positioning request transmitted from a vertical application device;
transmitting, based on the positioning request, a positioning message to a terminal through a first access method; and
receiving location information transmitted, based on the positioning message and through a second access method, from the terminal, and transmitting the location information to the vertical application device.

In an embodiment, according to the method for location information reporting of an embodiment of the present application, in case that the positioning request is a location information request, transmitting the positioning message to the terminal based on the positioning request includes:
determining a second access method and a target positioning method from pre-stored positioning capability information of the terminal based on the location information request;
generating the positioning message based on the location information request, the second access method and the target positioning method; and
transmitting the positioning message to the terminal.

In an embodiment, according to the method for location information reporting of an embodiment of the present application, the location information request includes at least one of following:
an identifier of the terminal;
a positioning area;
positioning quality of service;
a positioning time;
a reporting period of the location information;
a reporting frequency of the location information; or
a triggering condition for reporting the location information.

In an embodiment, according to the method for location information reporting of an embodiment of the present application, in case that the location information request includes the positioning area and the positioning quality of service, determining the second access method and the target positioning method from the pre-stored positioning capability information of the terminal based on the location information request includes:
determining an access method corresponding to the positioning area in the positioning capability information as the second access method; and
determining a positioning method satisfying the positioning quality of service in the positioning capability information as the target positioning method.

In an embodiment, according to the method for location information reporting of an embodiment of the present application, the method further includes:
transmitting the positioning message to a core network device and a 3rd party location server respectively; and
receiving location information of the terminal obtained, based on the positioning message, by the core network device and the 3rd party location server respectively.

In an embodiment, according to the method for location information reporting of an embodiment of the present application, transmitting the location information to the vertical application device includes:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

In an embodiment, according to the method for location information reporting of an embodiment of the present application, the method further includes:
updating the second access method and/or the target positioning method to obtain the location information satisfying the location information request in case that the location information satisfying the location information request is absent.

In an embodiment, according to the method for location information reporting of an embodiment of the present application, in case that the positioning request is a location information subscription request, transmitting the positioning message to the terminal based on the positioning request includes:
determining whether the vertical application device is authorized to subscribe the location information based on the location information subscription request; and
transmitting the positioning message to the terminal in case that the vertical application device is authorized to subscribe the location information.

In an embodiment, according to the method for location information reporting of an embodiment of the present application, transmitting the positioning message to the terminal includes:
transmitting the positioning message to the terminal based on a 3GPP access method and/or a non-3GPP access method in positioning capability information of the terminal.

In an embodiment, according to the method for location information reporting of an embodiment of the present application, the method further includes:
transmitting the positioning message to a first core network device and/or a second core network device respectively; and
receiving location information of the terminal obtained, based on the positioning message, by the first core network device and/or the second core network device respectively.

In an embodiment, according to the method for location information reporting of an embodiment of the present application, in case that the location information subscription request includes a subscription condition, transmitting the location information to the vertical application device includes:
determining whether location information satisfying the subscription condition is present among location information transmitted from the terminal, location information transmitted from the first core network device, and location information transmitted from the second core network device; and
transmitting the location information satisfying the subscription condition to the vertical application device in case that the location information satisfying the subscription condition is present.

In an embodiment, according to the method for location information reporting of an embodiment of the present application, the method further includes:
receiving a location service registration request transmitted from the terminal, where the location service registration request includes positioning capability information of the terminal;
performing authorization and privacy check on the terminal based on the positioning capability information; and
transmitting a location service registration response to the terminal after it is determined that the authorization and privacy check are passed.

In an embodiment, according to the method for location information reporting of an embodiment of the present application, the positioning capability information includes at least one of following:
an identifier of the terminal;
access methods supported by the terminal;
positioning methods corresponding to access methods; or
positioning quality of service corresponding to positioning methods.

In an embodiment, according to the method for location information reporting of an embodiment of the present application, the access methods include at least one of following:
two 3GPP access methods;
two non-3GPP access methods; or
one 3GPP access method and one non-3GPP access method.

An embodiment of the present application further provides a terminal, including a memory, a transceiver and a processor;
the memory is used for storing a computer program;
the transceiver is used for receiving and transmitting data under control of the processor; and
the processor is used for reading the computer program in the memory and performing the following operations:
   receiving a positioning message transmitted, through a first access method, from an application layer location management device; and
   determining a second access method for the terminal and a target positioning method based on the positioning message; and transmitting, through the second access method, location information obtained by the terminal based on the target positioning method to the application layer location management device.

In an embodiment, according to the terminal of an embodiment of the present application, determining the second access method for the terminal and the target positioning method based on the positioning message includes any of following:
based on the positioning message, determining an access method with best network quality among access methods supported by the terminal as the second access method, and determining a positioning method corresponding to the second access method as the target positioning method;
in case that the positioning message includes positioning quality of service, determining a positioning method satisfying the positioning quality of service among positioning methods supported by the terminal as the target positioning method and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message includes an access method indication, determining an access method indicated by the access method indication as the second access method, and determining a positioning method indicated by the access method indication as the target positioning method;
in case that the positioning message includes priorities of access methods supported by the terminal, determining an access method with highest priority as the second access method, and determining a positioning method corresponding to the second access method as the target positioning method; or
in case that the positioning message includes an access method and a positioning method, determining the access method included in the positioning message as the second access method, and determining the positioning method included in the positioning message as the target positioning method.

In an embodiment, according to the terminal of the embodiment of the present application, the operations further include:
transmitting a location service registration request to the application layer location management device, where the location service registration request includes positioning capability information of the terminal; and
receiving a location service registration response transmitted, based on the positioning capability information, from the application layer location management device.

In an embodiment, according to the terminal of the embodiment of the present application, the positioning capability information includes at least one of following:
an identifier of the terminal;
access methods supported by the terminal;
positioning methods corresponding to access methods; or
positioning quality of service corresponding to positioning methods.

In an embodiment, according to the terminal of an embodiment of the present application, the access methods include at least one of following:
two 3GPP access methods;
two non-3GPP access methods; or
one 3GPP access method and one non-3GPP access method.

An embodiment of the present application further provides an application layer location management device, including a memory, a transceiver and a processor,
the memory is used for storing a computer program;
the transceiver is used for receiving and transmitting data under control of the processor; and
the processor is used for reading the computer program in the memory and performing the following operations:
   receiving a positioning request transmitted from a vertical application device;
   transmitting, based on the positioning request, a positioning message to a terminal through a first access method; and
   receiving location information transmitted, based on the positioning message through a second access method, from the terminal, and transmitting the location information to the vertical application device.

In an embodiment, according to the application layer location management device of an embodiment of the present application, in case that the positioning request is a location information request, transmitting the positioning message to the terminal based on the positioning request includes:
determining a second access method and a target positioning method from pre-stored positioning capability information of the terminal based on the location information request;
generating the positioning message based on the location information request, the second access method and the target positioning method; and
transmitting the positioning message to the terminal.

In an embodiment, according to the application layer location management device of an embodiment of the present application, the location information request includes at least one of following:
an identifier of the terminal;
a positioning area;
positioning quality of service;
a positioning time;
a reporting period of the location information;
a reporting frequency of the location information; or
a triggering condition for reporting the location information.

In an embodiment, according to the application layer location management device of an embodiment of the present application, in case that the location information request includes the positioning area and the positioning quality of service, determining the second access method and the target positioning method from the pre-stored positioning capability information of the terminal based on the location information request includes:
determining an access method corresponding to the positioning area in the positioning capability information as the second access method; and
determining a positioning method satisfying the positioning quality of service in the positioning capability information as the target positioning method.

In an embodiment, according to the application layer location management device of an embodiment of the present application, the operations further include:
transmitting the positioning message to a core network device and a 3rd party location server respectively; and
receiving location information of the terminal obtained, based on the positioning message, by the core network device and the 3rd party location server respectively.

In an embodiment, according to the application layer location management device of an embodiment of the present application, transmitting the location information to the vertical application device includes:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

In an embodiment, according to the application layer location management device of an embodiment of the present application, the operations further include:
updating the second access method and/or the target positioning method to obtain the location information satisfying the location information request in case that the location information satisfying the location information request is absent.

In an embodiment, according to the application layer location management device of an embodiment of the present application, in case that the positioning request is a location information subscription request, transmitting the positioning message to the terminal based on the positioning request includes:
determining whether the vertical application device is authorized to subscribe the location information based on the location information subscription request; and
transmitting the positioning message to the terminal in case that the vertical application device is authorized to subscribe the location information.

In an embodiment, according to the application layer location management device of an embodiment of the present application, transmitting the positioning message to the terminal includes:
transmitting the positioning message to the terminal based on a 3GPP access method and/or a non-3GPP access method in positioning capability information of the terminal.

In an embodiment, according to the application layer location management device of an embodiment of the present application, the operations further include:
transmitting the positioning message to a first core network device and/or a second core network device respectively; and
receiving location information of the terminal obtained, based on the positioning message, by the first core network device and/or the second core network device respectively.

In an embodiment, according to the application layer location management device of an embodiment of the present application, in case that the location information subscription request includes a subscription condition, transmitting the location information to the vertical application device includes:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

In an embodiment, according to the application layer location management device of an embodiment of the present application, the operations further include:
receiving a location service registration request transmitted from the terminal, where the location service registration request includes positioning capability information of the terminal;
performing authorization and privacy check on the terminal based on the positioning capability information; and
transmitting a location service registration response to the terminal after it is determined that the authorization and privacy check are passed.

In an embodiment, according to the application layer location management device of an embodiment of the present application, the positioning capability information includes at least one of following:
an identifier of the terminal;
access methods supported by the terminal;
positioning methods corresponding to access methods; or
positioning quality of service corresponding to positioning methods.

In an embodiment, according to the application layer location management device of an embodiment of the present application, the access methods include at least one of following:
two 3GPP access methods;
two non-3GPP access methods; or
one 3GPP access method and one non-3GPP access method.

An embodiment of the present application further provides an apparatus for location information reporting, including:
a receiving unit, used for receiving a positioning message transmitted, through a first access method, from an application layer location management device;
a determining unit, used for determining a second access method for the terminal and a target positioning method based on the positioning message; and
a transmitting unit, used for transmitting, through the second access method, location information obtained by the terminal based on the target positioning method to the application layer location management device.

An embodiment of the present application further provides an apparatus for location information reporting, including:
a receiving unit, used for receiving a positioning request transmitted from a vertical application device; and
a transmitting unit, used for transmitting, based on the positioning request, a positioning message to a terminal through a first access method;
where the receiving unit is further used for receiving location information transmitted, based on the positioning message through a second access method, from the terminal, and
the transmitting unit is further used for transmitting the location information to the vertical application device.

In the methods and apparatuses for location information reporting in the embodiments of the present application, after receiving a positioning message transmitted, through a first access method, from an application layer location management device, the terminal determines a second access method for the terminal and a target positioning method based on the positioning message; and the terminal transmits, through the second access method, location information obtained by the terminal based on the target positioning method to the application layer location management device, where the first access method may be the same as or different from the second access method, which enhances flexibility of reporting the location information of the terminal.

### BRIEF DESCRIPTION OF THE DRAWINGS

To clearly illustrate solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a first schematic flowchart of a method for location information reporting according to an embodiment of the present application;
FIG. 2 is a second schematic flowchart of a method for location information reporting according to an embodiment of the present application;
FIG. 3 is a first schematic interaction flowchart of a method for location information reporting according to an embodiment of the present application;
FIG. 4 is a second schematic interaction flowchart of a method for location information reporting according to an embodiment of the present application;
FIG. 5 is a third schematic interaction flowchart of a method for location information reporting according to an embodiment of the present application;
FIG. 6 is a fourth schematic interaction flowchart of a method for location information reporting according to an embodiment of the present application;
FIG. 7 is a schematic structural diagram of a terminal according to an embodiment of the present application;
FIG. 8 is a schematic structural diagram of an application layer location management device according to an embodiment of the present application;
FIG. 9 is a first schematic structural diagram of an apparatus for location information reporting according to an embodiment of the present application; and
FIG. 10 is a second schematic structural diagram of an apparatus for location information reporting according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions provided by the embodiments of the present application may be applicable to various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal and a network device, and may also include a core network part, such as an evolved packet system (EPS), a 5G system (5GS), and the like.

The terminal in the embodiments of the present application may be a device that provides voice and/or data connectivity to a user, a hand-held device with a wireless connection function, or other processing device connected to a wireless modem. In different systems, the names of the terminal may be different. For example, in the 5G system, the terminal may be called as user equipment (UE). A wireless terminal may communicate with one or more core networks (CN) via a radio access network (RAN), and the wireless terminal may be a mobile terminal, such as a mobile phone (or referred to as cellular phone) and a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Embodiments of the present application provide methods and apparatuses for location information reporting, which are used to enhance the flexibility of reporting location information of the terminal. The methods and the apparatuses are based on the same concept, the implementation of the apparatuses and the methods may be referred to each other since the principles of the methods and the apparatuses are similar, and the same parts are not repeated.

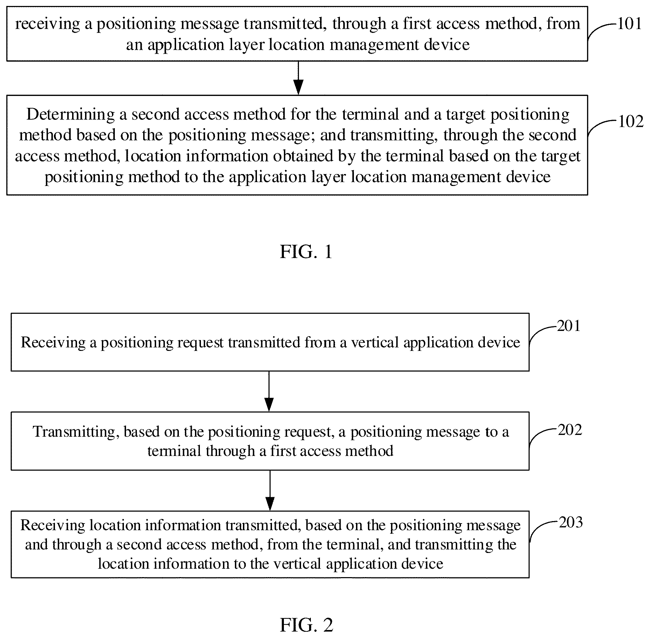

FIG. 1 is a first schematic flowchart of a method for location information reporting according to an embodiment of the present application. As shown in FIG. 1, an embodiment of the present application provides a method for location information reporting, which is performed by a terminal, or may also be performed by an apparatus for location information reporting equipped in a terminal. For example, the apparatus may be a location management client (LMC), and the LMC may be implemented by software and/or hardware. The method includes the following steps.

Step 101: receiving a positioning message transmitted, through a first access method, from an application layer location management device.

The application layer location management device is a location management server (LMS).

In an embodiment, the first access method may be a 3GPP access method or a non-3GPP access method.

In an embodiment, the 3GPP access method may be a new radio (NR) access method, a long term evolution (LTE) access method, or a satellite access method, etc.

In an embodiment, the non-3GPP access method may be a wireless local area network (WLAN), or Bluetooth, etc.

In an embodiment, the positioning message may include:
an identifier of the terminal;
positioning quality of service (QoS);
a reporting period of location information;
a reporting frequency of location information;
a triggering condition for reporting location information;
an access method indication; or
priorities of access methods supported by the terminal.

In an embodiment, the identifier of the terminal may be a generic public subscription identifier (GPSI).

In an embodiment, the positioning QoS may include positioning precision, or positioning delay, etc.

In the present application, the location information is the location information of the terminal.

Step 102: determining a second access method for the terminal and a target positioning method based on the positioning message; and transmitting, through the second access method, location information obtained by the terminal based on the target positioning method to the application layer location management device.

In an embodiment, the second access method may be a 3GPP access method or a non-3GPP access method.

In an embodiment, the second access method may be different from or the same as the first access method.

For example, in case that the second access method is different from the first access method, the second access method is a non-3GPP access method, and the first access method is a 3GPP access method.

For example, in case that the second access method is the same as the first access method, the second access method is a 3GPP access method, and the first access method is also a 3GPP access method.

In an embodiment, the target positioning method may be any of the following:
downlink time difference of arrival (DL-TDOA);
multi-round trip time (Multi-RTT);
global navigation satellite system (GNSS); or
fingerprint positioning.

In the method for location information reporting provided by the embodiment of FIG.1, the application layer location management device transmits the positioning message through the first access method; the terminal determines the second access method and the target positioning method based on the positioning message; and the terminal transmits, through the second access method, the location information obtained by the terminal based on the target positioning method to the application layer location management device, where the first access method may be the same as or different from the second access method, which enhances flexibility and reliability of reporting the location information by the terminal.

In some embodiments, determining the second access method for the terminal and the target positioning method based on the positioning message may include any of the following seven modes.

Mode 11: based on the positioning message, determining an access method with the best network quality among access methods supported by the terminal as the second access method, and determining a positioning method corresponding to the second access method as the target positioning method.

In an embodiment, after receiving the positioning message, the terminal determines an access method with the best network quality among access methods supported by the terminal as the second access method.

In an embodiment of the present application, the access methods supported by the terminal include at least one of the following:
two 3GPP access methods;
two non-3GPP access methods; or
one 3GPP access method and one non-3GPP access method.

In an embodiment, the network quality may be a congestion situation.

In an embodiment, after receiving the positioning message, an access method with better congestion situation (i.e., no congestion) is determined as the second access method.

In an embodiment, the terminal may pre-store a first mapping relationship, and the first mapping relationship includes a mapping relationship between the access methods and positioning methods corresponding to the access methods. The terminal searches for the positioning method corresponding to the second access method in the first mapping relationship to determine the target positioning method.

In an embodiment of the present application, determining the access method with the best network quality among access methods supported by the terminal as the second access method may enhance the reliability that the terminal transmits the location information to the application layer location management device and shorten the positioning delay.

Mode 12: in case that the positioning message includes positioning quality of service, determining a positioning method satisfying the positioning quality of service among positioning methods supported by the terminal as the target positioning method and determining an access method corresponding to the target positioning method as the second access method.

In an embodiment, the terminal may pre-store a second mapping relationship, and the second mapping relationship includes the positioning methods and positioning quality of service corresponding to the positioning methods. The terminal may search for a positioning method satisfying the positioning quality of service in the second mapping relationship based on the positioning quality of service included in the positioning message to determine the target positioning method, and search for the access method corresponding to the target positioning method in the above-mentioned first mapping relationship based on the target positioning method to determine the second access method.

In an embodiment, in case that the positioning quality of service includes positioning precision and positioning delay, the positioning method satisfying the positioning quality of service is a positioning method of which a positioning precision is greater than or equal to the positioning precision included in the positioning quality of service, and a positioning delay is less than or equal to the positioning delay included in the positioning quality of service.

In the embodiment of the present application, the terminal determines the positioning method satisfying the positioning quality of service among the positioning methods supported by the terminal as the target positioning method, and obtains the location information based on the target positioning method, which improves the positioning precision for the terminal.

Mode 13: based on the positioning message, determining an access method indicated by an operator policy as the second access method, and determining a positioning method indicated by an operator policy as the target positioning method.

After receiving the positioning message, the terminal may determine the second access method and/or the target positioning method based on the operator policy.

For example, in case that the terminal determines the second access method and the target positioning method based on the operator policy, the terminal determines an access method indicated by an operator policy as the second access method, and determines a positioning method indicated by an operator policy as the target positioning method.

For example, in case that the terminal determines the second access method based on the operator policy, the terminal determines the positioning method corresponding to the second access method as the target positioning method based on the second access method and the above-mentioned first mapping relationship.

Mode 14: based on the positioning message, determining an access method preconfigured by the terminal as the second access method, and determining a positioning method preconfigured by the terminal as the target positioning method.

Mode 15: in case that the positioning message includes an access method indication, determining an access method indicated by the access method indication as the second access method, and determining a positioning method indicated by the access method indication as the target positioning method.

In an embodiment, the access method indication includes a first identifier and a second identifier, the first identifier indicates the access method, and the second identifier indicates the positioning method.

In an embodiment, the terminal may pre-store a third mapping relationship, the third mapping relationship includes a mapping relationship between multiple access method identifiers and access methods corresponding to the multiple access method identifiers, as well as a mapping relationship between multiple positioning method identifiers and positioning methods corresponding to the multiple positioning method identifiers, where the multiple access method identifiers include a first identifier, and the multiple positioning method identifiers include a second identifier.

In an embodiment, after receiving the positioning message, the terminal determines the access method corresponding to the first identifier in the third mapping relationship as the second access method, and determines the positioning method corresponding to the second identifier in the third mapping relationship as the target positioning method.

Mode 16: in case that the positioning message includes priorities of access methods supported by the terminal, determining an access method with the highest priority as the second access method, and determining a positioning method corresponding to the second access method as the target positioning method.

In an embodiment, in the positioning message, priorities of the access methods include access method identifiers of the access methods ranked in a descending order of priorities. After receiving the positioning message, the terminal may determine an access method corresponding to a first access method identifier based on the third mapping relationship, and determine the access method corresponding to the first access method identifier as the second access method, and determine the positioning method corresponding to the second access method as the target positioning method based on the above-mentioned first mapping relationship.

Mode 17: in case that the positioning message includes an access method and a positioning method, determining the access method included in the positioning message as the second access method, and determining the positioning method included in the positioning message as the target positioning method.

In an embodiment, other than determining the second access method and the target positioning method through the above seven modes, the terminal may further determine the second access method and the target positioning method through other modes, and details are not described here.

In the present application, the terminal may determine the second access method and the target positioning method through the above seven modes, which enhances the flexibility that the terminal determines the second access method and the target positioning method.

In some embodiments, before receiving the positioning message transmitted from the application layer location management device, the method for location information reporting according to the present application may include:
transmitting, by the terminal, a location service registration request to the application layer location management device, where the location service registration request includes positioning capability information of the terminal; and
receiving, by the terminal, a location service registration response transmitted, based on the positioning capability information, from the application layer location management device.

In some embodiments, the positioning capability information includes at least one of the following items:
an identifier of the terminal;
access methods supported by the terminal;
positioning methods corresponding to access methods; or
positioning quality of service corresponding to the positioning methods.

For example, in case that the access methods include a 3GPP access method and a non-3GPP access method, the positioning methods corresponding to the 3GPP access method include DL_TDOA and/or Multi-RTT positioning methods, etc. The positioning precision and the positioning delay of DL_TDOA are 1 m and 10 ms, respectively, the positioning precision and the positioning delay of Multi-RTT are 0.5 m and 5 ms, respectively. The positioning methods corresponding to the non-3GPP access method include GNSS and/or fingerprint positioning methods, etc. The positioning precision and the positioning delay of GNSS are 2 m and 20 ms, respectively, the positioning precision and the positioning delay of fingerprint are 1.1 m and 15 ms, respectively.

FIG. 2 is a second schematic flowchart of a method for location information reporting according to an embodiment of the present application. As shown in FIG. 2, an embodiment of the present application provides a method for location information reporting, which is performed by an application layer location management device, or may also be performed by an apparatus for location information reporting equipped in an application layer location management device. The apparatus for location information reporting may be implemented by a combination of software and/or hardware. The method includes the following steps.

Step 201: receiving a positioning request transmitted from a vertical application device.

In an embodiment, the positioning request may be a location information request or a location information subscription request.

Step 202: transmitting, based on the positioning request, a positioning message to a terminal through a first access method.

Step 203: receiving location information transmitted, based on the positioning message and through a second access method, from the terminal, and transmitting the location information to the vertical application device (VAL server).

In an embodiment, the second access method may be different from or the same as the first access method.

In the method provided by the embodiment of FIG. 2, the application layer location management device transmits the positioning message to the terminal based on the positioning request, the terminal determines the second access method and the target positioning method based on the positioning message, and transmits the location information to the application layer location management device through the second access method. The terminal is not required to report the location information through an access method that the terminal accesses the core network (i.e., an access method that the application layer location management device transmits the positioning message), which ensures the flexibility that the terminal reports the location information.

In some embodiments, in case that the positioning request is a location information request, transmitting the positioning message to the terminal based on the positioning request includes:
determining a second access method and a target positioning method from pre-stored positioning capability information of the terminal based on the location information request;
generating the positioning message based on the location information request, the second access method and the target positioning method; and
transmitting the positioning message to the terminal.

In some embodiments, the location information request includes at least one of the following:
an identifier of the terminal;
a positioning area;
positioning quality of service;
a positioning time;
a reporting period of the location information;
a reporting frequency of the location information; or
a triggering condition for reporting the location information.

In some embodiments, the positioning message includes at least one of the following:
an identifier of the terminal;
a positioning area;
positioning quality of service;
a positioning time;
a reporting period of the location information;
a reporting frequency of the location information;
a triggering condition for reporting the location information;
a second access method; or
a target positioning method.

In some embodiments, in case that the location information request includes the positioning area and the positioning quality of service, determining the second access method and the target positioning method from the pre-stored positioning capability information of the terminal based on the location information request includes:
determining an access method corresponding to the positioning area in the positioning capability information as the second access method; and
determining a positioning method satisfying the positioning quality of service in the positioning capability information as the target positioning method.

In an embodiment, the application layer location management device pre-stores a fourth mapping relationship and a second mapping relationship. The fourth mapping relationship includes multiple positioning areas and access methods corresponding to the multiple positioning areas. The application layer location management device may search for the access method corresponding to the positioning area in the fourth mapping relationship based on the positioning area included in the location information request, to determine the second access method, and determine the positioning method satisfying the positioning quality of service in the positioning capability information as the target positioning method based on the second mapping relationship.

For example, in case that the terminal is an automated guided vehicle (AGV), if the positioning area is indoors, then it may be found that the access method corresponding to the positioning area is NR in the 3GPP access method based on the fourth mapping relationship, and then NR is determined as the second access method. Further, the positioning method (for example, DL_TDOA) satisfying the positioning quality of service may be determined as the target positioning method based on the second mapping relationship.

In some embodiments, based on the embodiment of FIG. 2, the method further includes:
transmitting a positioning message to a core network device (5GC) and a 3rd party location server (3rd PLS) respectively; and
receiving location information of the terminal obtained, based on the positioning message, by the core network device and the 3rd party location server respectively.

In some embodiments, transmitting the location information to the vertical application device includes:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

In an embodiment, the location information satisfying the location information request means that the location information is located within the positioning area in the location information request, a time when the terminal obtains the location information is within the positioning time in the location information request, and the location information satisfies the positioning quality of service in the location information request, etc.

In some embodiments, based on the embodiment of FIG. 2, the method further includes:
updating the second access method and/or the target positioning method to obtain location information satisfying the location information request in case that the location information satisfying the location information request is absent.

For example, in case that the second access method is NR, the second access method is updated to NR and Bluetooth.

For example, in case that the target positioning method is DL_TDOA, the target positioning method is updated to Multi-RTT.

In some embodiments, in case that the positioning request is a location information subscription request, transmitting the positioning message to the terminal based on the positioning request includes:
determining whether the vertical application device is authorized to subscribe the location information based on the location information subscription request; and
transmitting the positioning message to the terminal in case that the vertical application device is authorized to subscribe the location information.

In some embodiments, transmitting the positioning message to the terminal includes:
transmitting the positioning message to the terminal based on a 3GPP access method and/or a non-3GPP access method in the positioning capability information of the terminal.

In some embodiments, based on the embodiment of FIG. 2, the method further includes:
transmitting the positioning message to a first core network device (referred to as 3GPP CN) and/or a second core network device (referred to as non-3GPP CN) respectively; and
receiving location information of the terminal obtained, based on the positioning message, by the first core network device and/or the second core network device respectively.

The location information subscription request includes at least one of the following:
an identifier of the terminal;
a subscription condition; or
an indication of supplementing positioning information.

In an embodiment, the subscription condition includes a reporting time interval of the location information and/or a positioning area, etc.

In some embodiments, in case that the location information subscription request includes a subscription condition, transmitting the location information to the vertical application device includes:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

The second access method and/or the target positioning method is updated to obtain location information satisfying the subscription condition in case that no location information satisfying the subscription condition is present.

In an embodiment, the location information satisfying the subscription condition means that the location information is located within the positioning area, and the reporting time interval of the location information is equal to the reporting time interval included in the subscription condition.

In some embodiments, based on the embodiment of FIG. 2, the method further includes:
receiving a location service registration request transmitted from the terminal, where the location service registration request includes positioning capability information of the terminal;
performing authorization and privacy check on the terminal based on the positioning capability information; and
transmitting a location service registration response to the terminal after it is determined that the authorization and privacy check on the terminal are passed.

Performing authorization and privacy check on the terminal is used for determining that whether the terminal may transmit location information to the outside. It is determined that the authorization and privacy check on the terminal are passed, which means that the terminal may transmit location information to the outside.

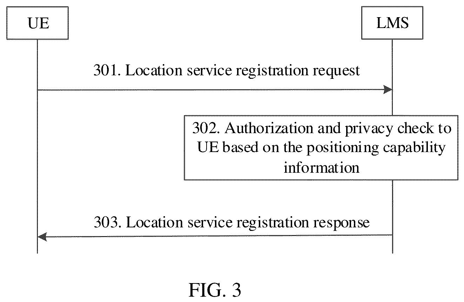

Based on the above embodiments, the method for registering, by the terminal, positioning capability information is described below in conjunction with FIG. 3.

FIG. 3 is a first schematic interaction flowchart of a method for location information reporting according to an embodiment of the present application. As shown in FIG. 3, the method includes the following steps.

Step 301: a terminal (UE) transmits a location service registration request to an application layer location management device (location management server, LMS), where the location service registration request includes positioning capability information of the terminal.

After the UE supporting dual access registers to the 5GC, a location management client (LMC) inside the UE transmits a location service registration request to the LMS.

Step 302: LMS performs authorization and privacy check on the terminal based on the positioning capability information.

Step 303: after determining that UE passes authentication and privacy check, LMS transmits a location service registration response to UE.

After determining that UE passes authentication and privacy check, LMS stores the positioning capability information of UE.

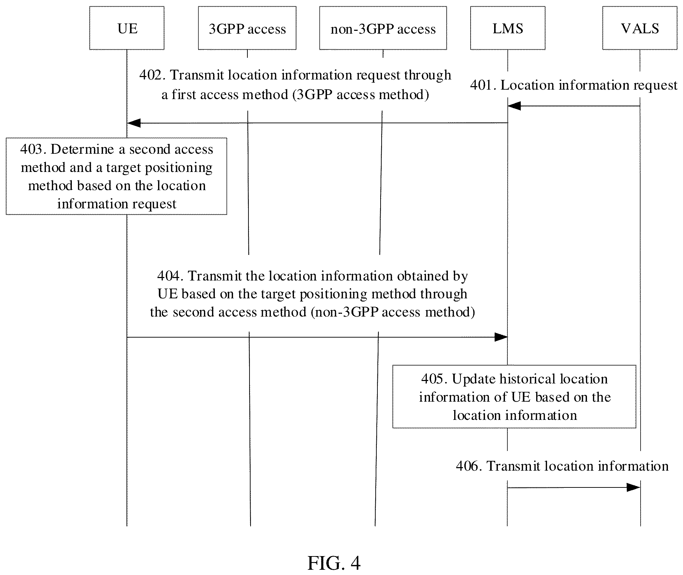

FIG. 4 is a second schematic interaction flowchart of a method for location information reporting according to an embodiment of the present application. As shown in FIG. 4, the method includes the following steps.

Step 401: a vertical application device (VAL server, VALS) transmits a location information request to LMS.

For example, VALS may be an application device in a smart factory.

Step 402: LMS transmits a location information request to UE through a first access method (for example, 3GPP access method).

Step 403: UE determines a second access method and a target positioning method based on the location information request.

For example, UE may be an automated guided vehicle (AGV).

Step 404: UE transmits the location information obtained by the UE based on the target positioning method to LMS through the second access method (for example, a non-3GPP access method).

Step 405: LMS updates historical location information of UE based on the location information.

In an embodiment, in case of determining to store the historical location information of the UE, LMS updates the historical location information to the above location information, and in case of determining not to store the historical location information of the UE, LMS stores the above location information.

Step 406: LMS transmits the location information to VALS.

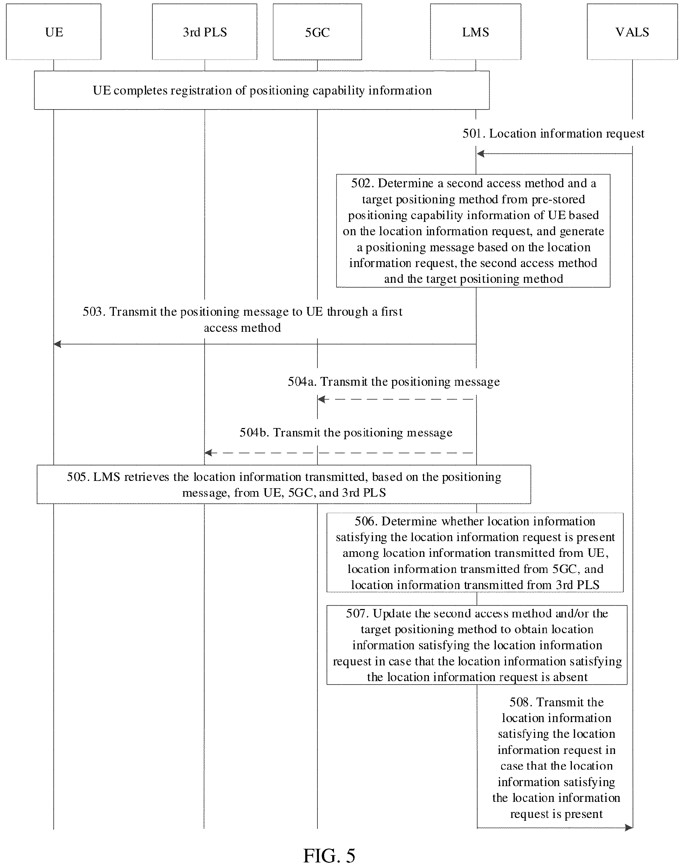

FIG. 5 is a third schematic interaction flowchart of a method for location information reporting according to an embodiment of the present application. As shown in FIG. 5, the method includes the following steps.

Step 501: VALS transmits a location information request to LMS.

Step 502: LMS determines a second access method and a target positioning method in pre-stored positioning capability information of UE based on the location information request, and generates a positioning message based on the location information request, the second access method and the target positioning method.

Step 503: LMS transmits the positioning message to UE through a first access method.

Step 504a: LMS transmits the positioning message to a core network device (5GC).

5GC performs positioning to UE based on the positioning message to obtain the location information of UE.

Step 504b: LMS transmits the positioning message to a 3rd party location server (3rd PLS).

3rd PLS performs positioning to UE based on the positioning message to obtain the location information of UE.

Step 505: LMS retrieves the location information transmitted, based on the positioning message, from UE, 5GC, and 3rd PLS.

Step 506: LMS determines whether location information satisfying the location information request is present among location information transmitted from UE, location information transmitted from 5GC, and location information transmitted from 3rd PLS.

Step 507: LMS updates the second access method and/or the target positioning method to obtain location information satisfying the location information request in case that the location information satisfying the location information request is absent.

Step 508: LMS transmits the location information satisfying the location information request to VALS.

LMS transmits the location information satisfying the location information request to VALS in case that the location information satisfying the location information request is present.

In an embodiment, LMS updates the second access method and/or the target positioning method, regenerates new positioning message, and performs steps 503 to 507 until LMS obtains the location information satisfying the location information request and then transmits the location information satisfying the location information request to the VALS.

In the method provided in the embodiment of FIG. 4, UE may determine the second access method and the target positioning method based on the location information request. In the method provided in the embodiment of FIG. 5, the LMS may determine the second access method and the target positioning method in the pre-stored positioning capability information of UE based on the location information request, to enhance the flexibility and intelligence of determining the second access method and the target positioning method.

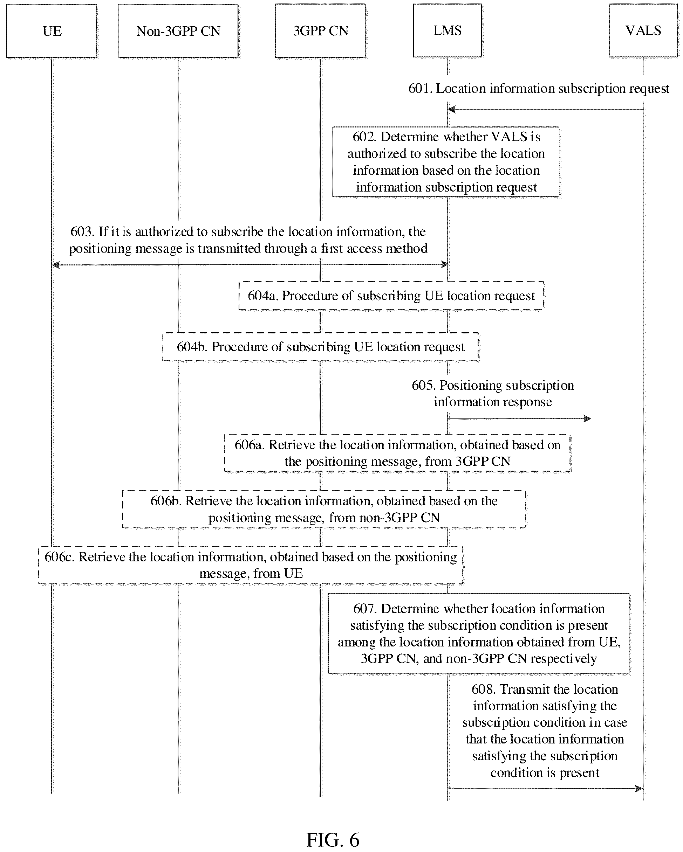

FIG. 6 is a fourth schematic interaction flowchart of a method for location information reporting according to an embodiment of the present application. As shown in FIG. 6, the method includes the following steps.

Step 601: VALS transmits a location information subscription request to LMS, where the location information subscription request includes a subscription condition.

Step 602: LMS determines whether VALS is authorized to subscribe the location information based on the location information subscription request.

In an embodiment, LMS determines whether VALS is authorized to subscribe the location information of the UE based on the location information subscription request.

Step 603: in case that VALS is authorized to subscribe the location information, LMS transmits the positioning message through a first access method.

In an embodiment, in step 603, LMS transmits the positioning message to the UE through the first access method.

Step 604a: LMS and 3GPP CN perform a procedure of subscribing UE location request.

In an embodiment, in step 604a, LMS transmits a positioning message to 3GPP CN, and 3GPP CN transmits a positioning response to LMS.

Step 604b: LMS and non-3GPP CN perform a procedure of subscribing UE location request.

In an embodiment, in step 604b, LMS transmits a positioning message to non-3GPP CN, and non-3GPP CN transmits a positioning response to LMS.

Step 605: LMS transmits a positioning subscription information response to VALS.

Step 606a: LMS retrieves the location information, obtained based on the positioning message, from 3GPP CN.

In an embodiment, LMS receives the location information obtained by 3GPP CN based on the positioning message.

Step 606b: LMS retrieves the location information, obtained based on the positioning message, from non-3GPP CN.

In an embodiment, LMS receives the location information obtained by non-3GPP CN based on the positioning message.

Step 606c: LMS retrieves the location information, obtained based on the positioning message, from UE.

In an embodiment, in step 606c, UE determines a second access method and a target positioning method based on the positioning message; UE transmits location information obtained based on the target positioning method to the LMS through the second access method.

Step 607: LMS determines whether location information satisfying the subscription condition is present among the location information retrieved from UE, 3GPP CN, and non-3GPP CN respectively.

Step 608: LMS transmits the location information satisfying the subscription condition to VALS in case that the location information satisfying the subscription condition is present.

In case that no location information satisfying the subscription condition is present, LMS transmits the location information satisfying the subscription condition to VALS, repeatedly performs steps 603 to 609 until the location information satisfying the subscription condition is obtained, and transmits the location information satisfying the subscription condition to VALS.

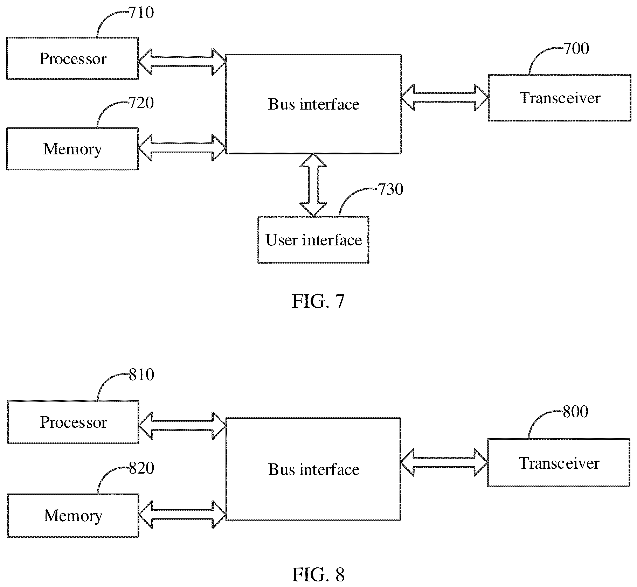

FIG. 7 is a schematic structural diagram of a terminal according to an embodiment of the present application. As shown in FIG. 7, the terminal includes a memory 720, a transceiver 700, and a processor 710.

The memory 720 is used for storing a computer program.

The transceiver 700 is used for receiving and transmitting data under control of the processor 710.

The processor 710 is used for reading the computer program in the memory 720 and performing the following operations:
receiving a positioning message transmitted, through a first access method, from an application layer location management device; and
determining a second access method for the terminal and a target positioning method based on the positioning message; and transmitting, through the second access method, location information obtained by the terminal based on the target positioning method to the application layer location management device.

In an embodiment, the transceiver 700 is used for receiving and transmitting data under control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, which are well known in the art, and therefore are not further described in the present application. The bus interface provides an interface. The transceiver 700 may include multiple elements, i.e., include a transmitter and a receiver, units for providing communication with various other devices over transmission media including wireless channels, wired channels, fiber optic cables, and the like. For different user equipment, a user interface 730 may be an interface capable of externally or internally connecting the required device, and the connected device includes, but not limited to, a keypad, a display, a speaker, a microphone, a joystick, and the like.

The processor 710 is responsible for managing the bus architecture and general processing, and the memory 720 may store data used by the processor 710 when performing operations.

In an embodiment, the processor 710 may be a central processing unit (CPU), an application specific integrated circuit (ASIC), a field-programmable gate array (FPGA), or a complex programmable logic device (CPLD), and the processor may also use a multi-core architecture.

The processor is configured to perform any one of the methods performed by the terminal of the embodiments of the present application based on an obtained executable instruction by calling the computer program stored in the memory. The processor and memory may also be physically separated.

In an embodiment, according to the terminal of an embodiment of the present application, determining the second access method for the terminal and the target positioning method based on the positioning message includes any of the following:
based on the positioning message, determining an access method with best network quality among access methods supported by the terminal as the second access method, and determining a positioning method corresponding to the second access method as the target positioning method;
in case that the positioning message includes positioning quality of service, determining a positioning method satisfying the positioning quality of service among positioning methods supported by the terminal as the target positioning method and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message includes an access method indication, determining an access method indicated by the access method indication as the second access method, and determining a positioning method indicated by the access method indication as the target positioning method;
in case that the positioning message includes priorities of access methods supported by the terminal, determining an access method with highest priority as the second access method, and determining a positioning method corresponding to the second access method as the target positioning method; or
in case that the positioning message includes an access method and a positioning method, determining the access method included in the positioning message as the second access method, and determining the positioning method included in the positioning message as the target positioning method.

In an embodiment, according to the terminal of the embodiment of the present application, the operations further include:
transmitting a location service registration request to the application layer location management device, where the location service registration request includes positioning capability information of the terminal; and
receiving a location service registration response transmitted, based on the positioning capability information, from the application layer location management device.

In an embodiment, according to the terminal of the embodiment of the present application, the positioning capability information includes at least one of the following:
an identifier of the terminal;
access methods supported by the terminal;
positioning methods corresponding to access methods; or
positioning quality of service corresponding to positioning methods.

In an embodiment, according to the terminal of an embodiment of the present application, the access methods include at least one of the following:
two 3GPP access methods;
two non-3GPP access methods; or
one 3GPP access method and one non-3GPP access method.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments are not repeated in the present application.

FIG. 8 is a schematic structural diagram of an application layer location management device according to an embodiment of the present application. As shown in FIG. 8, the application layer location management device includes a memory 820, a transceiver 800, and a processor 810.

The memory 820 is used for storing a computer program.

The transceiver 800 is used for receiving and transmitting data under control of the processor 810.

The processor 810 is used for reading the computer program in the memory 820 and performing the following operations:
receiving a positioning request transmitted from a vertical application device;
transmitting, based on the positioning request, a positioning message to a terminal through a first access method; and
receiving location information transmitted, based on the positioning message through a second access method, from a terminal, and transmitting the location information to a vertical application device.

In an embodiment, the transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, which are well known in the art, and therefore are not further described in the present application. The bus interface provides an interface. The transceiver 800 may include multiple elements, i.e., include a transmitter and a receiver, units for providing communication with various other devices over transmission media including wireless channels, wired channels, fiber optic cables, and the like. The processor 810 is responsible for managing the bus architecture and general processing, and the memory 820 may store data used by the processor 810 when performing operations.

The processor 810 may be a central processing unit (CPU), an application specific integrated circuit (ASIC), a field-programmable gate array (FPGA), or a complex programmable logic device (CPLD), and the processor may also use a multi-core architecture.

In an embodiment, according to the application layer location management device of an embodiment of the present application, in case that the positioning request is a location information request, transmitting the positioning message to the terminal based on the positioning request includes:
determining a second access method and a target positioning method from pre-stored positioning capability information of the terminal based on the location information request;
generating the positioning message based on the location information request, the second access method and the target positioning method; and
transmitting the positioning message to the terminal.

In an embodiment, according to the application layer location management device of an embodiment of the present application, the location information request includes at least one of the following:
an identifier of the terminal;
a positioning area;
positioning quality of service;
a positioning time;
a reporting period of the location information;
a reporting frequency of the location information; or
a triggering condition for reporting the location information.

In an embodiment, according to the application layer location management device of an embodiment of the present application, in case that the location information request includes the positioning area and the positioning quality of service, determining the second access method and the target positioning method from the pre-stored positioning capability information of the terminal based on the location information request includes:
determining an access method corresponding to the positioning area in the positioning capability information as the second access method; and
determining a positioning method satisfying the positioning quality of service in the positioning capability information as the target positioning method.

In an embodiment, according to the application layer location management device of an embodiment of the present application, the operations further include:
transmitting the positioning message to a core network device and a 3rd party location server respectively; and
receiving location information of the terminal obtained, based on the positioning message, by the core network device and the 3rd party location server respectively.

In an embodiment, according to the application layer location management device of an embodiment of the present application, transmitting the location information to the vertical application device includes:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

In an embodiment, according to the application layer location management device of an embodiment of the present application, the operations further include:
updating the second access method and/or the target positioning method to obtain the location information satisfying the location information request in case that the location information satisfying the location information request is absent.

In an embodiment, according to the application layer location management device of an embodiment of the present application, in case that the positioning request is a location information subscription request, transmitting the positioning message to the terminal based on the positioning request includes:
determining whether the vertical application device is authorized to subscribe the location information based on the location information subscription request; and
transmitting the positioning message to the terminal in case that the vertical application device is authorized to subscribe the location information.

In an embodiment, according to the application layer location management device of an embodiment of the present application, transmitting the positioning message to the terminal includes:
transmitting the positioning message to the terminal based on a 3GPP access method and/or a non-3GPP access method in positioning capability information of the terminal.

In an embodiment, according to the application layer location management device of an embodiment of the present application, the operations further include:
transmitting the positioning message to a first core network device and/or a second core network device respectively; and
receiving location information of the terminal obtained, based on the positioning message, by the first core network device and/or the second core network device respectively.

In an embodiment, according to the application layer location management device of an embodiment of the present application, in case that the location information subscription request includes a subscription condition, transmitting the location information to the vertical application device includes:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

In an embodiment, according to the application layer location management device of an embodiment of the present application, the operations further include:
receiving a location service registration request transmitted from the terminal, where the location service registration request includes positioning capability information of the terminal;
performing authorization and privacy check on the terminal based on the positioning capability information; and
transmitting a location service registration response to the terminal after it is determined that the authorization and privacy check are passed.

In an embodiment, according to the application layer location management device of an embodiment of the present application, the positioning capability information includes at least one of the following:
an identifier of the terminal;
access methods supported by the terminal;
positioning methods corresponding to access methods; or
positioning quality of service corresponding to positioning methods.

In an embodiment, according to the application layer location management device of an embodiment of the present application, the access methods include at least one of the following:
two 3GPP access methods;
two non-3GPP access methods; or
one 3GPP access method and one non-3GPP access method.

It should be noted here that the above-mentioned application layer location management device according to the embodiments of the present application may implement all the method steps implemented by the above-mentioned method embodiments performed by the application layer location management device, and may achieve the same effect. The same parts and beneficial effects as the same method embodiments are not repeated here.

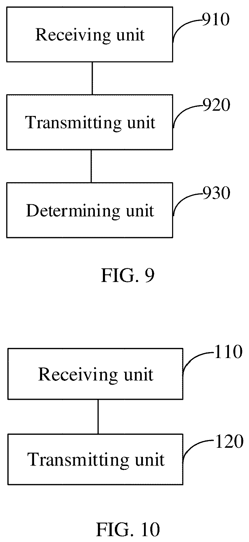

FIG. 9 is a first schematic structural diagram of an apparatus for location information reporting according to an embodiment of the present application. The apparatus for location information reporting is equipped in a terminal and the apparatus for location information reporting includes:
a receiving unit 910, used for receiving a positioning message transmitted, through a first access method, from an application layer location management device;
a determining unit 920, used for determining a second access method for the terminal and a target positioning method based on the positioning message; and
a transmitting unit 930, used for transmitting, through the second access method, location information obtained by the terminal based on the target positioning method to the application layer location management device.

In an embodiment, the determining unit 920 is used for performing any of the following:
based on the positioning message, determining an access method with best network quality among access methods supported by the terminal as the second access method, and determining a positioning method corresponding to the second access method as the target positioning method;
in case that the positioning message includes positioning quality of service, determining a positioning method satisfying the positioning quality of service among positioning methods supported by the terminal as the target positioning method and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message includes an access method indication, determining an access method indicated by the access method indication as the second access method, and determining a positioning method indicated by the access method indication as the target positioning method;
in case that the positioning message includes priorities of access methods supported by the terminal, determining an access method with highest priority as the second access method, and determining a positioning method corresponding to the second access method as the target positioning method; or
in case that the positioning message includes an access method and a positioning method, determining the access method included in the positioning message as the second access method, and determining the positioning method included in the positioning message as the target positioning method.

In an embodiment, the transmitting unit 930 is further used for transmitting a location service registration request to the application layer location management device, where the location service registration request includes positioning capability information of the terminal; and
the receiving unit 910 is further used for receiving a location service registration response transmitted, based on the positioning capability information, from the application layer location management device.

In an embodiment, the positioning capability information includes at least one of the following:
an identifier of the terminal;
access methods supported by the terminal;
positioning methods corresponding to access methods; or
positioning quality of service corresponding to positioning methods.

In an embodiment, the access methods include at least one of the following:
two 3GPP access methods;
two non-3GPP access methods; or
one 3GPP access method and one non-3GPP access method.

FIG. 10 is a second schematic structural diagram of an apparatus for location information reporting according to an embodiment of the present application. The apparatus for location information reporting is equipped in an application layer location management device and the apparatus for location information reporting includes:
a receiving unit 110, used for receiving a positioning request transmitted from a vertical application device; and
a transmitting unit 120, used for transmitting, based on the positioning request, a positioning message to a terminal through a first access method;
where the receiving unit 110 is further used for receiving location information transmitted, based on the positioning message and through a second access method, from the terminal, and
the transmitting unit 120 is further used for transmitting the location information to the vertical application device.

In an embodiment, in case that the positioning request is a location information request, the transmitting unit 120 is used for:
determining a second access method and a target positioning method from pre-stored positioning capability information of the terminal based on the location information request;
generating the positioning message based on the location information request, the second access method and the target positioning method; and
transmitting the positioning message to the terminal.

In an embodiment, the location information request includes at least one of the following:
an identifier of the terminal;
a positioning area;
positioning quality of service;
a positioning time;
a reporting period of the location information;
a reporting frequency of the location information; or
a triggering condition for reporting the location information.

In an embodiment, in case that the location information request includes a positioning area and a positioning quality of service, the transmitting unit 120 is used for:
determining an access method corresponding to the positioning area in the positioning capability information as the second access method; and
determining a positioning method satisfying the positioning quality of service in the positioning capability information as the target positioning method.

In an embodiment, the transmitting unit 120 is used for transmitting the positioning message to a core network device and a 3rd party location server respectively; and
the receiving unit 110 is used for receiving location information of the terminal obtained, based on the positioning message, by the core network device and the 3rd party location server respectively.

In an embodiment, the transmitting unit 120 is further used for:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

In an embodiment, the transmitting unit 120 is further used for:
updating the second access method and/or the target positioning method to obtain the location information satisfying the location information request in case that the location information satisfying the location information request is absent.

In an embodiment, in case that the positioning request is a location information subscription request, the transmitting unit 120 is used for:
determining whether the vertical application device is authorized to subscribe the location information based on the location information subscription request; and
transmitting the positioning message to the terminal in case that the vertical application device is authorized to subscribe the location information.

In an embodiment, the transmitting unit 120 is further used for:
transmitting the positioning message to the terminal based on a 3GPP access method and/or a non-3GPP access method in the positioning capability information of the terminal.

In an embodiment, the transmitting unit 120 is further used for transmitting the positioning message to a first core network device and/or a second core network device respectively; and
the receiving unit 110 is further used for receiving location information of the terminal obtained, based on the positioning message, by the first core network device and/or the second core network device respectively.

In an embodiment, in case that the location information subscription request includes a subscription condition, the transmitting unit 120 is used for:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

In an embodiment, the receiving unit 110 is further used for receiving a location service registration request transmitted from the terminal, where the location service registration request includes positioning capability information of the terminal; and performing authorization and privacy check on the terminal based on the positioning capability information;
the transmitting unit 120 is further used for transmitting a location service registration response to the terminal after it is determined that the authorization and privacy check are passed.

In an embodiment, the positioning capability information includes at least one of the following:
an identifier of the terminal;
access methods supported by the terminal;
positioning methods corresponding to access methods; or
positioning quality of service corresponding to positioning methods.

In an embodiment, the access methods include at least one of the following:
two 3GPP access methods;
two non-3GPP access methods; or
one 3GPP access method and one non-3GPP access method.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

(The general description of the software and hardware implementations in the above embodiments may be supplemented in combination with the solutions of the present application. For example, the embodiment of the present application provides an apparatus for ...)

It should be noted here that the above-mentioned apparatus according to the embodiments of the present application may implement all the method steps implemented by the above-mentioned method embodiments, and may achieve the same effect. The same parts and beneficial effects as the same method embodiments are not repeated.

An embodiment of the present application further provides a processor-readable storage medium storing a computer program, where the computer program causes a processor to perform any of the methods for location information reporting provided in above embodiments.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As appreciated by those skilled in the art, embodiments of the present application may be provided as a method, a system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made to the present application without departing from the scope of the present application. As such, provided that these modifications and variations of the present application fall within the scope of the claims of the present application and their equivalents, the present application is also intended to cover such modifications and variations.

## Claims

1. A method for location information reporting, performed by a terminal, comprising:
receiving a positioning message transmitted, through a first access method, from an application layer location management device; and
determining a second access method for the terminal and a target positioning method based on the positioning message; and transmitting, through the second access method, location information obtained by the terminal based on the target positioning method to the application layer location management device.

2. The method of claim 1, wherein determining the second access method for the terminal and the target positioning method based on the positioning message comprises any of following:
based on the positioning message, determining an access method with best network quality among access methods supported by the terminal as the second access method, and determining a positioning method corresponding to the second access method as the target positioning method;
in case that the positioning message comprises positioning quality of service, determining a positioning method satisfying the positioning quality of service among positioning methods supported by the terminal as the target positioning method, and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message comprises an access method indication, determining an access method indicated by the access method indication as the second access method, and determining a positioning method indicated by the access method indication as the target positioning method;
in case that the positioning message comprises priorities of access methods supported by the terminal, determining an access method with highest priority as the second access method, and determining a positioning method corresponding to the second access method as the target positioning method; or
in case that the positioning message comprises an access method and a positioning method, determining the access method comprised in the positioning message as the second access method, and determining the positioning method comprised in the positioning message as the target positioning method.

3. The method of claim 1 or 2, further comprising:
transmitting a location service registration request to the application layer location management device, wherein the location service registration request comprises positioning capability information of the terminal; and
receiving a location service registration response transmitted, based on the positioning capability information, from the application layer location management device.

4. The method of claim 3, wherein the positioning capability information comprises at least one of following:
an identifier of the terminal;
access methods supported by the terminal;
positioning methods corresponding to access methods; or
positioning quality of service corresponding to positioning methods.

5. The method of claim 2 or 4, wherein the access methods comprise at least one of following:
two 3GPP access methods;
two non-3GPP access methods; or
one 3GPP access method and one non-3GPP access method.

6. A method for location information reporting, performed by an application layer location management device, comprising:
receiving a positioning request transmitted from a vertical application device;
transmitting, based on the positioning request, a positioning message to a terminal through a first access method; and
receiving location information transmitted, based on the positioning message and through a second access method, from the terminal, and transmitting the location information to the vertical application device.

7. The method of claim 6, wherein in case that the positioning request is a location information request, transmitting the positioning message to the terminal based on the positioning request comprises:
determining a second access method and a target positioning method from pre-stored positioning capability information of the terminal based on the location information request;
generating the positioning message based on the location information request, the second access method and the target positioning method; and
transmitting the positioning message to the terminal.

8. The method of claim 7, wherein the location information request comprises at least one of following:
an identifier of the terminal;
a positioning area;
positioning quality of service;
a positioning time;
a reporting period of the location information;
a reporting frequency of the location information; or
a triggering condition for reporting the location information.

9. The method of claim 8, wherein in case that the location information request comprises the positioning area and the positioning quality of service, determining the second access method and the target positioning method from the pre-stored positioning capability information of the terminal based on the location information request comprises:
determining an access method corresponding to the positioning area in the positioning capability information as the second access method; and
determining a positioning method satisfying the positioning quality of service in the positioning capability information as the target positioning method.

10. The method of claim 8 or 9, further comprising:
transmitting the positioning message to a core network device and a 3rd party location server respectively; and
receiving location information of the terminal obtained, based on the positioning message, by the core network device and the 3rd party location server respectively.

11. The method of claim 10, wherein transmitting the location information to the vertical application device comprises:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

12. The method of claim 11, further comprising:
updating the second access method and/or the target positioning method to obtain the location information satisfying the location information request in case that the location information satisfying the location information request is absent.

13. The method of claim 6, wherein in case that the positioning request is a location information subscription request, transmitting the positioning message to the terminal based on the positioning request comprises:
determining whether the vertical application device is authorized to subscribe the location information based on the location information subscription request; and
transmitting the positioning message to the terminal in case that the vertical application device is authorized to subscribe the location information.

14. The method of claim 13, wherein transmitting the positioning message to the terminal comprises:
transmitting the positioning message to the terminal based on a 3GPP access method and/or a non-3GPP access method in positioning capability information of the terminal.

15. The method of claim 14, further comprising:
transmitting the positioning message to a first core network device and/or a second core network device respectively; and
receiving location information of the terminal obtained, based on the positioning message, by the first core network device and/or the second core network device respectively.

16. The method of claim 15, wherein in case that the location information subscription request comprises a subscription condition, transmitting the location information to the vertical application device comprises:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

17. The method of any of claims 6 to 16, further comprising:
receiving a location service registration request transmitted from the terminal, wherein the location service registration request comprises positioning capability information of the terminal;
performing authorization and privacy check on the terminal based on the positioning capability information; and
transmitting a location service registration response to the terminal after it is determined that the authorization and privacy check are passed.

18. The method of claim 17, wherein the positioning capability information comprises at least one of following:
an identifier of the terminal;
access methods supported by the terminal;
positioning methods corresponding to access methods; or
positioning quality of service corresponding to positioning methods.

19. The method of claim 18, wherein the access methods comprise at least one of following:
two 3GPP access methods;
two non-3GPP access methods; or
one 3GPP access method and one non-3GPP access method.

20. A terminal, comprising a memory, a transceiver and a processor,
wherein the memory is used for storing a computer program;
the transceiver is used for receiving and transmitting data under control of the processor; and
the processor is used for reading the computer program in the memory and performing the following operations:
receiving a positioning message transmitted, through a first access method, from an application layer location management device; and
determining a second access method for the terminal and a target positioning method based on the positioning message; and transmitting, through the second access method, location information obtained by the terminal based on the target positioning method to the application layer location management device.

21. The terminal of claim 20, wherein determining the second access method for the terminal and the target positioning method based on the positioning message comprises any of following:
based on the positioning message, determining an access method with best network quality among access methods supported by the terminal as the second access method, and determining a positioning method corresponding to the second access method as the target positioning method;
in case that the positioning message comprises positioning quality of service, determining a positioning method satisfying the positioning quality of service among positioning methods supported by the terminal as the target positioning method, and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message comprises an access method indication, determining an access method indicated by the access method indication as the second access method, and determining a positioning method indicated by the access method indication as the target positioning method;
in case that the positioning message comprises priorities of access methods supported by the terminal, determining an access method with highest priority as the second access method, and determining a positioning method corresponding to the second access method as the target positioning method; or
in case that the positioning message comprises an access method and a positioning method, determining the access method comprised in the positioning message as the second access method, and determining the positioning method comprised in the positioning message as the target positioning method.

22. The terminal of claim 20 or 21, wherein the operations further comprise:
transmitting a location service registration request to the application layer location management device, wherein the location service registration request comprises positioning capability information of the terminal; and
receiving a location service registration response transmitted, based on the positioning capability information, from the application layer location management device.

23. The terminal of claim 22, wherein the positioning capability information comprises at least one of following:
an identifier of the terminal;
access methods supported by the terminal;
positioning methods corresponding to access methods; or
positioning quality of service corresponding to positioning methods.

24. The terminal of claim 21 or 23, wherein the access methods comprise at least one of the following:
two 3GPP access methods;
two non-3GPP access methods; or
one 3GPP access method and one non-3GPP access method.

25. An application layer location management device, comprising a memory, a transceiver and a processor,
wherein the memory is used for storing a computer program;
the transceiver is used for receiving and transmitting data under control of the processor; and
the processor is used for reading the computer program in the memory and performing the following operations:
receiving a positioning request transmitted from a vertical application device;
transmitting, based on the positioning request, a positioning message to a terminal through a first access method; and
receiving location information transmitted, based on the positioning message and through a second access method, from the terminal, and transmitting the location information to the vertical application device.

26. The device of claim 25, wherein in case that the positioning request is a location information request, transmitting the positioning message to the terminal based on the positioning request comprises:
determining a second access method and a target positioning method from pre-stored positioning capability information of the terminal based on the location information request;
generating the positioning message based on the location information request, the second access method and the target positioning method; and
transmitting the positioning message to the terminal.

27. The device of claim 26, wherein the location information request comprises at least one of following:
an identifier of the terminal;
a positioning area;
positioning quality of service;
a positioning time;
a reporting period of the location information;
a reporting frequency of the location information; or
a triggering condition for reporting the location information.

28. The device of claim 27, wherein in case that the location information request comprises the positioning area and the positioning quality of service, determining the second access method and the target positioning method from the pre-stored positioning capability information of the terminal based on the location information request comprises:
determining an access method corresponding to the positioning area in the positioning capability information as the second access method; and
determining a positioning method satisfying the positioning quality of service in the positioning capability information as the target positioning method.

29. The device of claim 27 or 28, wherein the operations further comprise:
transmitting the positioning message to a core network device and a 3rd party location server respectively; and
receiving location information of the terminal obtained, based on the positioning message, by the core network device and the 3rd party location server respectively.

30. The device of claim 29, wherein transmitting the location information to the vertical application device comprises:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

31. The device of claim 30, wherein the operations further comprise:
updating the second access method and/or the target positioning method to obtain the location information satisfying the location information request in case that the location information satisfying the location information request is absent.

32. The device of claim 25, wherein in case that the positioning request is a location information subscription request, transmitting the positioning message to the terminal based on the positioning request comprises:
determining whether the vertical application device is authorized to subscribe the location information based on the location information subscription request; and
transmitting the positioning message to the terminal in case that the vertical application device is authorized to subscribe the location information.

33. The device of claim 32, wherein transmitting the positioning message to the terminal comprises:
transmitting the positioning message to the terminal based on a 3GPP access method and/or a non-3GPP access method in positioning capability information of the terminal.

34. The device of claim 33, wherein the operations further comprise:
transmitting the positioning message to a first core network device and/or a second core network device respectively; and
receiving location information of the terminal obtained, based on the positioning message, by the first core network device and/or the second core network device respectively.

35. The device of claim 34, wherein in case that the location information subscription request comprises a subscription condition, transmitting the location information to the vertical application device comprises:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

36. The device of any of claims 25 to 35, wherein the operations further comprise:
receiving a location service registration request transmitted from the terminal, wherein the location service registration request comprises positioning capability information of the terminal;
performing authorization and privacy check on the terminal based on the positioning capability information; and
transmitting a location service registration response to the terminal after it is determined that the authorization and privacy check are passed.

37. The device of claim 36, wherein the positioning capability information comprises at least one of following:
an identifier of the terminal;
access methods supported by the terminal;
positioning methods corresponding to access methods; or
positioning quality of service corresponding to positioning methods.

38. The device of claim 37, wherein the access methods comprise at least one of following:
two 3GPP access methods;
two non-3GPP access methods; or
one 3GPP access method and one non-3GPP access method.

39. An apparatus for location information reporting, comprising:
a receiving unit, used for receiving a positioning message transmitted, through a first access method, from an application layer location management device;
a determining unit, used for determining a second access method for the terminal and a target positioning method based on the positioning message; and
a transmitting unit, used for transmitting, through the second access method, location information obtained by the terminal based on the target positioning method to the application layer location management device.

40. The apparatus of claim 39, wherein determining the second access method for the terminal and the target positioning method based on the positioning message comprises any of following:
based on the positioning message, determining an access method with best network quality among access methods supported by the terminal as the second access method, and determining a positioning method corresponding to the second access method as the target positioning method;
in case that the positioning message comprises positioning quality of service, determining a positioning method satisfying the positioning quality of service among positioning methods supported by the terminal as the target positioning method, and determining an access method corresponding to the target positioning method as the second access method;
based on the positioning message, determining an access method indicated by an operator policy as the second access method, and determining a positioning method indicated by an operator policy as the target positioning method;
based on the positioning message, determining an access method preconfigured by the terminal as the second access method, and determining a positioning method preconfigured by the terminal as the target positioning method;
in case that the positioning message comprises an access method indication, determining an access method indicated by the access method indication as the second access method, and determining a positioning method indicated by the access method indication as the target positioning method;
in case that the positioning message comprises priorities of access methods supported by the terminal, determining an access method with highest priority as the second access method, and determining a positioning method corresponding to the second access method as the target positioning method; or
in case that the positioning message comprises an access method and a positioning method, determining the access method comprised in the positioning message as the second access method, and determining the positioning method comprised in the positioning message as the target positioning method.

41. The apparatus of claim 39 or 40, wherein the operations further comprise:
transmitting a location service registration request to the application layer location management device, wherein the location service registration request comprises positioning capability information of the terminal; and
receiving a location service registration response transmitted, based on the positioning capability information, from the application layer location management device.

42. The apparatus of claim 41, wherein the positioning capability information comprises at least one of following:
an identifier of the terminal;
access methods supported by the terminal;
positioning methods corresponding to access methods; or
positioning quality of service corresponding to positioning methods.

43. The apparatus of claim 40 or 42, wherein the access methods comprise at least one of following:
two 3GPP access methods;
two non-3GPP access methods; or
one 3GPP access method and one non-3GPP access method.

44. An apparatus for location information reporting, comprising:
a receiving unit, used for receiving a positioning request transmitted from a vertical application device; and
a transmitting unit, used for transmitting, based on the positioning request, a positioning message to a terminal through a first access method;
wherein the receiving unit is further used for receiving location information transmitted, based on the positioning message and through a second access method, from the terminal, and
the transmitting unit is further used for transmitting the location information to the vertical application device.

45. The apparatus of claim 44, wherein in case that the positioning request is a location information request, transmitting the positioning message to the terminal based on the positioning request comprises:
determining a second access method and a target positioning method from pre-stored positioning capability information of the terminal based on the location information request;
generating the positioning message based on the location information request, the second access method and the target positioning method; and
transmitting the positioning message to the terminal.

46. The apparatus of claim 45, wherein the location information request comprises at least one of following:
an identifier of the terminal;
a positioning area;
positioning quality of service;
a positioning time;
a reporting period of the location information;
a reporting frequency of the location information; or
a triggering condition for reporting the location information.

47. The apparatus of claim 46, wherein in case that the location information request comprises the positioning area and the positioning quality of service, determining the second access method and the target positioning method from the pre-stored positioning capability information of the terminal based on the location information request comprises:
determining an access method corresponding to the positioning area in the positioning capability information as the second access method; and
determining a positioning method satisfying the positioning quality of service in the positioning capability information as the target positioning method.

48. The apparatus of claim 46 or 47, wherein the operations further comprise:
transmitting the positioning message to a core network device and a 3rd party location server respectively; and
receiving location information of the terminal obtained, based on the positioning message, by the core network device and the 3rd party location server respectively.

49. The apparatus of claim 48, wherein transmitting the location information to the vertical application device comprises:
determining whether location information satisfying the location information request is present among location information transmitted from the terminal, location information transmitted from the core network device, and location information transmitted from the 3rd party location server; and
transmitting the location information satisfying the location information request to the vertical application device in case that the location information satisfying the location information request is present.

50. The apparatus of claim 49, wherein the operations further comprise:
updating the second access method and/or the target positioning method to obtain the location information satisfying the location information request in case that the location information satisfying the location information request is absent.

51. The apparatus of claim 44, wherein in case that the positioning request is a location information subscription request, transmitting the positioning message to the terminal based on the positioning request comprises:
determining whether the vertical application device is authorized to subscribe the location information based on the location information subscription request; and
transmitting the positioning message to the terminal in case that the vertical application device is authorized to subscribe the location information.

52. The apparatus of claim 51, wherein transmitting the positioning message to the terminal comprises:
transmitting the positioning message to the terminal based on a 3GPP access method and/or a non-3GPP access method in the positioning capability information of the terminal.

53. The apparatus of claim 52, wherein the operations further comprise:
transmitting the positioning message to a first core network device and/or a second core network device respectively; and
receiving location information of the terminal obtained, based on the positioning message, by the first core network device and/or the second core network device respectively.

54. The apparatus of claim 53, wherein in case that the location information subscription request comprises a subscription condition, transmitting the location information to the vertical application device comprises:
determining whether location information satisfying the subscription condition is present among location information transmitted from the terminal, location information transmitted from the first core network device, and/or location information transmitted from the second core network device; and
transmitting the location information satisfying the subscription condition to the vertical application device in case that the location information satisfying the subscription condition is present.

55. The apparatus of any of claims 44 to 54, wherein the operations further comprise:
receiving a location service registration request transmitted from the terminal, wherein the location service registration request comprises positioning capability information of the terminal;
performing authorization and privacy check on the terminal based on the positioning capability information; and
transmitting a location service registration response to the terminal after it is determined that the authorization and privacy check are passed.

56. The apparatus of claim 55, wherein the positioning capability information comprises at least one of following:
an identifier of the terminal;
access methods supported by the terminal;
positioning methods corresponding to access methods; or
positioning quality of service corresponding to positioning methods.

57. The apparatus of claim 56, wherein the access methods comprise at least one of following:
two 3GPP access methods;
two non-3GPP access methods; or
one 3GPP access method and one non-3GPP access method.

58. A processor-readable storage medium, storing a computer program, wherein the computer program causes a processor to perform the method for location information reporting of any of claims 1 to 19.
